# DEMANDE DE BREVET EUROPEEN

(11) **EP 4 759 467 A1**
(43) Date de publication de la demande: **17.06.2026**
(21) Numéro de dépôt: 25221500.9
(22) Date de dépôt: 08.12.2025
(51) Int. Cl.: B23K 11/00, B23K 11/04, B23K 101/26

(54) **SYSTÈME DE SOUDURE MOBILE OU STATIONNAIRE**

(30) Priorité: 10.12.2024 FR 2413744
(71) Demandeur: Geismar, 92200 Neuilly sur Seine (FR); Proflex Automotive Srl, Judet Mures (RO)
(72) Inventeur: BUZOIANU, Vlad Mihai, Bucarest (RO); TE, Kévin, 93500 Pantin (FR); DALMAS, Grégoire, 78210 Saint-Cyr-l'École (FR)
(74) Mandataire: Germain Maureau

(57) **Abrégé**

L'invention concerne un système de soudure mobile ou stationnaire (1) pour réaliser un soudage d'une première pièce métallique avec une deuxième pièce métallique par étincelage bout à bout, ledit système de soudure (1) comprenant au moins deux blocs de contact électrique d'étincelage (17) configurées pour permettre le passage d'un courant alternatif monophasé ; un système de génération d'énergie électrique (30) à courant continu configuré pour fournir un courant continu ; et un système de conversion d'énergie électrique (40) comprenant un onduleur (41), ledit onduleur (41) étant disposé entre le système de génération d'énergie électrique (30) et lesdits au moins deux blocs de contact électrique d'étincelage (17) et étant configuré pour convertir le courant continu fourni par le système de génération d'énergie électrique (30) en un courant alternatif monophasé, ledit courant alternatif monophasé alimentant directement ou indirectement lesdits au moins deux blocs de contact électrique d'étincelage (17).

## Description

### Domaine technique de l'invention

La présente invention concerne un système de soudure mobile ou stationnaire pour réaliser un soudage d'une première pièce métallique avec une deuxième pièce métallique par étincelage bout à bout.

Plus particulièrement, l'invention concerne les systèmes de soudure mobiles ou stationnaires par étincelage bout à bout dans le domaine de l'outillage ferroviaire. Dans ce cas, l'invention peut être destinée à réaliser le soudage par étincelage bout à bout de deux rails de chemin de fer.

### Etat de la technique

Lors de la réalisation, ou la maintenance d'un chemin de fer, il est fréquent d'assembler entre eux deux morceaux de rails pour ne former qu'un seul rail. Pour réaliser une telle opération, il est connu de l'état de la technique d'utiliser soit le soudage à l'arc, soit le soudage aluminothermique, soit le soudage par étincelage bout à bout.

Cette dernière méthode est particulièrement intéressante, car elle permet de souder deux rails entre eux de manière rapide, et sans nécessiter d'ajout de matière. Pour cela, lorsque les deux rails sont placés en regard l'un de l'autre, un fort courant est mis à circuler entre les deux rails par l'intermédiaire de blocs de contact électriques, ce qui provoque un échauffement localisé au niveau de la jonction entre les deux rails. Des étincelles se produisent alors, et la matière constitutive des rails ramollit. Les deux rails sont ensuite rapprochés l'un de l'autre lors d'une étape de forgeage, pour qu'ils ne forment qu'une seule pièce métallique.

Afin de faciliter la construction et la maintenance des voies de chemin de fer, des systèmes de soudure mobiles ou stationnaires par étincelage bout à bout ont été développés. Ces systèmes embarquent l'ensemble des fonctions nécessaires à l'opération de soudage, à savoir :la tête de soudage, le système hydraulique qui alimente les différents éléments mécaniques, le système de refroidissement et les dispositifs de fourniture d'énergie.

Compte-tenu de la forte demande en énergie pour produire de la chaleur à la jonction entre les deux rails pour le soudage, il est fréquent d'utiliser des groupes électrogènes pour fournir de l'énergie au système de soudure mobile ou stationnaire.

Bien que cette solution donne satisfaction en ce que qu'elle permet d'alimenter les éléments du système de soudure mobile ou stationnaire en électricité, elle trouve des limites dans les opérations réalisées en atmosphère confinée, ou partiellement confinée, comme dans les tunnels par exemple.

En effet, un groupe électrogène diesel émet de la fumée en fonctionnement, ce qui rend son utilisation inadaptée pour les travaux de maintenance en tunnel car le manque d'aération entraine un risque inhalation de vapeur toxiques. Les soudures aluminothermiques émettent également des échappements qui peuvent être toxiques, rendant leur utilisation inadaptée pour les travaux dans les tunnels. Par ailleurs, le soudage aluminothermique est un procédé plus long, plus dangereux et qui produit des soudures de moins bonne qualité que la soudure par étincelage bout à bout. Par ailleurs, le groupe électrogène diesel produit du bruit en fonctionnement, ce qui provoque un inconfort et un danger si l'exposition au bruit est prolongée pour les opérateurs et les personnes environnantes du chantier.

Il existe donc un besoin de trouver une solution pour alimenter en énergie un système de soudure par étincelage bout à bout qui émette moins de substance toxiques pour les utilisateurs dans un tunnel, qui produise suffisamment d'énergie pour alimenter l'intégralité du système de soudure par étincelage bout à bout, et qui présente une maintenance facilitée.

### Objet de l'invention

La présente invention a pour but de proposer une solution qui réponde à tout ou partie des problèmes précités.

Ce but peut être atteint grâce à la mise en œuvre d'un système de soudure mobile ou stationnaire pour réaliser un soudage d'une première pièce métallique avec une deuxième pièce métallique par étincelage bout à bout, ledit système de soudure comprenant :
- une tête de soudage comprenant un premier mécanisme de serrage destiné à maintenir la première pièce métallique, un deuxième mécanisme de serrage destiné à maintenir la deuxième pièce métallique, et au moins un vérin configuré pour faire varier, par déplacement du premier mécanisme de serrage et/ou du deuxième mécanisme de serrage, une distance séparant le premier mécanisme de serrage du deuxième mécanisme de serrage ;
- au moins deux blocs de contact électrique d'étincelage comprenant un premier bloc de contact destiné à assurer un contact électrique avec la première pièce métallique et un deuxième bloc de contact destiné à assurer un contact électrique avec la deuxième pièce métallique ; lesdits au moins deux blocs de contact électrique d'étincelage étant configurés pour permettre le passage d'un courant alternatif ;
- un système de génération d'énergie électrique à courant continu configuré pour fournir un courant continu ;
- un système de conversion d'énergie électrique comprenant au moins un onduleur, ledit au moins un onduleur étant disposé entre le système de génération d'énergie électrique et lesdits au moins deux blocs de contact électrique d'étincelage et étant configuré pour convertir le courant continu fourni par le système de génération d'énergie électrique en un courant alternatif, ledit courant alternatif alimentant directement ou indirectement lesdits au moins deux blocs de contact électrique d'étincelage.

Les dispositions précédemment décrites permettent de proposer un système de soudure mobile ou stationnaire par étincelage bout à bout apte à réaliser le soudage de deux pièces métalliques en utilisant une puissance réduite. En effet, l'utilisation d'un système de génération d'énergie électrique à courant continu permet de fournir un courant suffisant pour alimenter les blocs de contact électrique d'étincelage et réaliser le soudage.

Le système de soudure peut en outre présenter une ou plusieurs des caractéristiques suivantes, prises seules ou en combinaison.

Selon un mode de réalisation, la première pièce métallique et la deuxième pièce métallique sont des rails, par exemple pour les chemins de fer.

Selon un mode de réalisation, le système de génération d'énergie électrique à courant continu est configuré pour fournir une tension électrique. Il est donc bien compris que le système de génération d'énergie électrique peut être une source de tension.

Selon un mode de réalisation, le système de génération d'énergie électrique à courant continu comprend un système de stockage d'énergie électrique.

Selon un mode de réalisation, le système de génération d'énergie électrique à courant continu comprend une pile à combustible.

Selon un mode de réalisation, le système de génération d'énergie électrique à courant continu comprend une batterie.

De manière avantageuse, l'utilisation d'une batterie comme source de courant continu permet de s'affranchir de l'utilisation d'un groupe électrogène. Le système est donc plus sécuritaire pour les utilisateurs.

Selon un mode de réalisation, le système de génération d'énergie électrique à courant continu comprend un système de contrôle de batterie, ou BMS pour Battery Management System selon la terminologie anglo-saxonne consacrée.

Selon un mode de réalisation, la batterie a une capacité comprise entre 84 kWh, et 112 kWh.

De cette manière, le système de soudure est adapté pour le soudage de rails de chemin de fer.

Selon un mode de réalisation, le système de soudure comprend un dispositif de charge configuré pour charger la batterie, de manière à stocker de l'énergie électrique.

Ainsi, il est possible de recharger la batterie entre plusieurs utilisations.

Selon un mode de réalisation, le dispositif de charge comprend un adaptateur de charge destiné à permettre une connexion électrique avec un caténaire.

De cette manière, il est possible de recharger la batterie au moyen d'un caténaire, ce qui est particulièrement avantageux pour des applications dans le domaine de l'outillage ferroviaire.

Selon un mode de réalisation, le système de conversion d'énergie électrique comprend un transformateur disposé entre l'onduleur et lesdits au moins deux blocs de contact électrique d'étincelage, ledit transformateur étant configuré pour abaisser la tension du courant alternatif ayant été converti par l'onduleur.

Ainsi, la tension électrique appliquée aux blocs de contact électrique d'étincelage est adaptée.

Selon un mode de réalisation, le système de soudure comprend en outre un système de refroidissement configuré pour refroidir la tête de soudage.

Selon un mode de réalisation, le système de refroidissement est configuré pour refroidir la centrale mécanique, ou les éléments électriques du système de soudure mobile ou stationnaire comme les dispositifs auxiliaires, le système de génération d'énergie électrique, ou l'un ou plusieurs des éléments du système de conversion d'énergie électrique.

Ainsi, il est possible de contrôler la température de la tête de soudage, notamment lors d'un forgeage de la première pièce métallique avec la deuxième pièce métallique.

Selon un mode de réalisation, le système de soudure comprend en outre un outil d'ébavurage définissant intérieurement un profil de soudure, ledit outil d'ébavurage étant destiné à être déplacé le long d'une soudure résultant du soudage de la première pièce métallique et de la deuxième pièce métallique, de sorte à retirer un excès de métal débordant hors du profil de soudure.

Ainsi, il est possible de conformer la soudure à un profil de soudure défini, ce qui est particulièrement avantageux dans le cas de soudage de rails de chemin de fer, il est ainsi possible de conserver une continuité du profil du rail entre le premier rail et le deuxième rail.

Selon un mode de réalisation, le système de soudure comprend en outre une centrale mécanique configuré pour actionner au moins un élément choisi parmi : l'outil d'ébavurage, le premier mécanisme de serrage, le deuxième mécanisme de serrage, et ledit au moins un vérin.

Ainsi, il est possible de centraliser l'ensemble des fonctions mécaniques dans un seul système pour contrôler plus efficacement le déplacement de l'ensemble des pièces.

Selon un mode de réalisation, la centrale mécanique est une centrale hydraulique.

Selon un mode de réalisation, le système de conversion d'énergie électrique comprend un onduleur triphasé, ledit onduleur triphasé étant disposé entre le système de génération d'énergie électrique et au moins un organe choisi parmi le système de refroidissement, le outil d'ébavurage, et la centrale mécanique, l'onduleur triphasé étant configuré pour convertir le courant continu fourni par le système de génération d'énergie électrique en un courant alternatif triphasé, ledit courant alternatif triphasé alimentant directement ou indirectement en énergie électrique ledit au moins un organe.

Ainsi, le système de génération d'énergie électrique peut alimenter à la fois les blocs de contact électrique d'étincelage, mais également le système de refroidissement, l'outil d'ébavurage, des dispositifs auxiliaires et/ou la centrale mécanique.

Selon un mode de réalisation, le système de soudure comprend des dispositifs auxiliaires, lesdits dispositifs auxiliaires comprenant au moins un capteur choisi parmi : des capteurs de température, des capteurs de tension électrique, des capteurs de courant électrique, des capteurs de forces, et des capteurs de déplacement, les dispositifs auxiliaires comprenant en outre une unité de commande configurée pour piloter la tête de soudage et lesdits au moins deux blocs de contact électrique d'étincelage en fonction de données mesurées par ledit au moins un capteur.

De cette manière, l'unité de commande peut déterminer les conditions optimales pour réaliser le soudage par étincelage bout à bout, notamment en fonction de paramètres mesurés par les capteurs, comme par exemple les forces appliquées, la température, la tension électrique, ou le courant électrique.

Selon un mode de réalisation, les dispositifs auxiliaires comprennent une batterie 24V, des lumières, et/ou des organes de contrôle.

Selon un mode de réalisation, le système de conversion d'énergie électrique comprend un abaisseur de tension, ledit abaisseur de tension étant disposé entre le système de génération d'énergie électrique et les dispositifs auxiliaires, ledit abaisseur de tension étant configuré pour abaisser une tension du courant continu fourni par le système de génération d'énergie électrique en un courant continu ayant une tension plus faible, de sorte à alimenter directement ou indirectement les dispositifs auxiliaires.

Ainsi, il est possible d'adapter la fourniture en énergie électrique en fonction des demandes en énergie électrique des dispositifs auxiliaires.

Selon un mode de réalisation, le système de soudure comprend une grue de manutention configurée pour déplacer la tête de soudage.

Ainsi, le positionnement de la tête de soudage au niveau des pièces métalliques à souder est facilité.

Selon un mode de réalisation, le système de soudure comprend un conteneur comprenant des roues et des galets, lesdites roues étant destinée à permettre un déplacement du conteneur sur une route, et les galets étant destinés à permettre un déplacement du conteneur sur des rails ; la tête de soudage, les blocs de contact électrique d'étincelage, le système de génération d'énergie électrique, et le système de conversion électrique étant logés à l'intérieur du conteneur.

Ainsi, il est possible de déplacer plus facilement l'ensemble du système de soudure.

Selon un mode de réalisation, le système de soudure est un système de soudure mobile.

### Description sommaire des dessins

D'autres aspects, buts, avantages et caractéristiques de l'invention apparaîtront mieux à la lecture de la description détaillée suivante de modes de réalisation préférés de celle-ci, donnée à titre d'exemple non limitatif, et faite en référence aux dessins annexés sur lesquels :
La figure 1 est une vue schématique d'un système de soudure selon un mode de réalisation particulier de l'invention.
La figure 2 est une vue schématique en coupe de la tête de soudage ayant le premier mécanisme de serrage et le deuxième mécanisme de serrage maintenant respectivement la première pièce métallique et la deuxième pièce métallique.
La figure 3 est une vue schématique en perspective des blocs de contact électrique d'étincelage en contact électrique avec la première pièce métallique et la deuxième pièce métallique.
La figure 4 est une vue schématique en perspective de l'outil d'ébavurage selon un mode de réalisation particulier de l'invention.

### Description détaillée

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux.

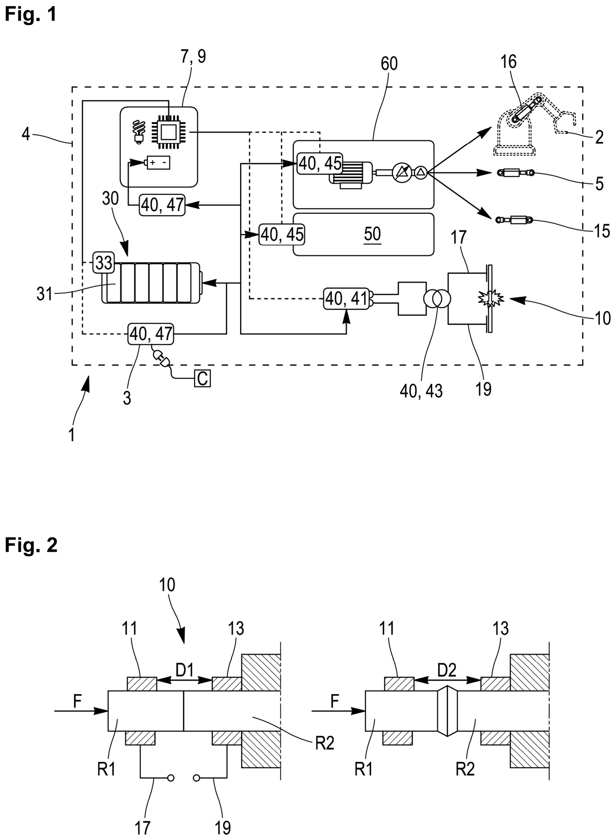

Comme cela est illustré sur les figures 1 à 4, l'invention concerne un système de soudure mobile ou stationnaire 1 pour réaliser un soudage d'une première pièce métallique R1 avec une deuxième pièce métallique R2 par étincelage bout à bout. Un tel système de soudure 1 trouve son utilité dans le domaine de l'outillage ferroviaire. Ainsi, de manière générale, la première pièce métallique R1 et la deuxième pièce métallique R2 sont des rails, par exemple pour les chemins de fer.

Afin de faciliter le déplacement et le transport du système de soudure mobile ou stationnaire, il est avantageux de prévoir un conteneur 4 dans lequel sont logés l'ensemble des éléments constitutifs du système de soudure 1. Ce conteneur 4 peut notamment comprendre des roues et des galets, lesdites roues étant destinée à permettre un déplacement du conteneur 4 sur une route, et les galets étant destinés à permettre un déplacement du conteneur 4 sur des rails.

Le système de soudure 1 comprend tout d'abord une tête de soudage 10 comprenant un premier mécanisme de serrage 11 destiné à maintenir la première pièce métallique R1, et un deuxième mécanisme de serrage 13 destiné à maintenir la deuxième pièce métallique R2. La tête de soudage comprend en outre au moins un vérin 15 configuré pour faire varier, par déplacement du premier mécanisme de serrage 11 et/ou du deuxième mécanisme de serrage 13, une distance séparant le premier mécanisme de serrage 11 du deuxième mécanisme de serrage 13. La figure 2 illustre notamment la tête de soudage 10 maintenant les deux pièces métalliques R1 et R2 lorsqu'une une distance D1 ou une distance D2 sépare le premier mécanisme de serrage 11 du deuxième mécanisme de serrage 13.

De manière générale, la tête de soudage 10 peut présenter une masse importante, il est donc avantageux de prévoir que le système de soudure 1 comprenne une grue de manutention 2 configurée pour déplacer la tête de soudage 10. Ainsi, le positionnement de la tête de soudage 10 au niveau des pièces métalliques à souder est facilité. Cette grue de manutention 2 peut être actionnée par l'intermédiaire d'un vérin de grue 16.

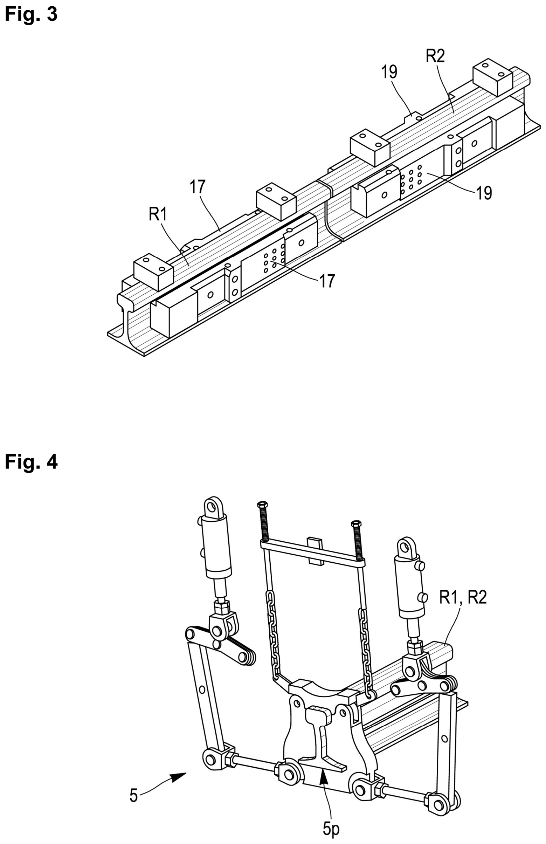

Le système de soudure 1 comprend également au moins deux blocs de contact électrique d'étincelage 17, 19 comprenant un premier bloc de contact 17 destiné à assurer un contact électrique avec la première pièce métallique R1 et un deuxième bloc de contact 19 destiné à assurer un contact électrique avec la deuxième pièce métallique R2. La figure 3 illustre un mode de réalisation dans lequel le système de soudure 1 comprend quatre blocs de contact électrique d'étincelage 17, 19, deux d'entre eux étant en contact électrique avec la première pièce métallique, et deux autres étant en contact électrique avec la deuxième pièce métallique. Ces blocs de contact électrique d'étincelage 17, 19 sont configurés pour permettre le passage d'un courant alternatif, généralement monophasé.

En référence à nouveau à la figure 1, le système de soudure 1 comprend également un système de génération d'énergie électrique 30 à courant continu configuré pour fournir un courant continu. Selon une première variante non représentée, le système de génération d'énergie électrique 30 à courant continu peut comprendre une pile à combustible. Selon une deuxième variante représentée sur la figure 1, le système de génération d'énergie électrique 30 à courant continu peut comprendre une batterie 31 par exemple ayant une capacité comprise entre 84 kWh, et 112 kWh. De manière avantageuse, l'utilisation d'une batterie 31 comme source de courant continu permet de s'affranchir de l'utilisation d'un groupe électrogène. Le système est donc plus sécuritaire pour les utilisateurs. Dans ce cas, il peut être prévu de fournir un système de contrôle de batterie 33, ou BMS pour Battery Management System selon la terminologie anglo-saxonne consacrée. La batterie 31 peut être alimentée en énergie électrique au moyen d'un dispositif de charge 3, de manière à stocker de l'énergie électrique. Ainsi, il est possible de recharger la batterie 31 entre plusieurs utilisations. De manière avantageuse, ce dispositif de charge 3 peut comprendre un adaptateur de charge destiné à permettre une connexion électrique avec un caténaire C. De cette manière, il est possible de recharger la batterie 31 au moyen d'un caténaire C, ce qui est particulièrement avantageux pour des applications dans le domaine de l'outillage ferroviaire.

Le système de soudure 1 peut également comprendre un système de refroidissement 50 configuré pour refroidir la tête de soudage 10. Ainsi, il est possible de contrôler la température de la tête de soudage 10, notamment lors d'un forgeage de la première pièce métallique R1 avec la deuxième pièce métallique R2. Le système de refroidissement 50 peut également être configuré pour refroidir la centrale mécanique 60, ou les éléments électriques du système de soudure 1 comme les dispositifs auxiliaires 7, le système de génération d'énergie électrique 30, ou l'un ou plusieurs des éléments du système de conversion d'énergie électrique 40.

Suite au forgeage de la première pièce métallique R1 avec la deuxième pièce métallique R2, et comme illustré sur la figure 4, un outil d'ébavurage 5 peut être déplacé le long de la soudure résultant du soudage de la première pièce métallique R1 et de la deuxième pièce métallique R2. C outil d'ébavurage 5 peut définir intérieurement un profil de soudure 5p de sorte à retirer un excès de métal débordant hors du profil de soudure 5p. Ainsi, il est possible de conformer la soudure à un profil de soudure 5p défini, ce qui est particulièrement avantageux dans le cas de soudage de rails de chemin de fer, il est ainsi possible de conserver une continuité du profil du rail entre le premier rail et le deuxième rail.

Comme cela est illustré sur la figure 1, le système de soudure 1 peut comprendre une centrale mécanique 60 configuré pour actionner au moins un élément choisi parmi : l'outil d'ébavurage 5, le premier mécanisme de serrage 11, le deuxième mécanisme de serrage 13, et ledit au moins un vérin 15, 16. Par exemple, une telle centrale mécanique 60 est une centrale hydraulique. Ainsi, il est possible de centraliser l'ensemble des fonctions mécaniques dans un seul système pour contrôler plus efficacement le déplacement de l'ensemble des pièces.

Le système de soudure 1 peut également comprendre des dispositifs auxiliaires 7, comprenant par exemple une batterie 24V, des lumières, et/ou des organes de contrôle. Ces dispositifs auxiliaires 7 peuvent comprendre également au moins un capteur choisi parmi : des capteurs de température, des capteurs de tension électrique, des capteurs de courant électrique, des capteurs de forces, et des capteurs de déplacement, et une unité de commande 9. Ainsi, l'unité de commande 9 peut être configurée pour piloter la tête de soudage 10 et lesdits au moins deux blocs de contact électrique d'étincelage 17, 19 en fonction de données mesurées par ledit au moins un capteur. De cette manière, l'unité de commande 9 peut déterminer les conditions optimales pour réaliser le soudage par étincelage bout à bout, notamment en fonction de paramètres mesurés par les capteurs, comme par exemple les forces appliquées, la température, la tension électrique, ou le courant électrique.

Enfin, le système de soudure comprend un système de conversion d'énergie électrique 40 comprenant un onduleur 41, généralement monophasé disposé entre le système de génération d'énergie électrique 30 et lesdits au moins deux blocs de contact électrique d'étincelage 17, 19. Cet onduleur monophasé 41 est configuré pour convertir le courant continu fourni par le système de génération d'énergie électrique 30 en un courant alternatif, généralement monophasé, ledit courant alternatif alimentant directement ou indirectement lesdits au moins deux blocs de contact électrique d'étincelage 17, 19.

De manière avantageuse, le système de conversion d'énergie électrique 40 peut comprendre un transformateur 43 disposé entre l'onduleur monophasé 41 et lesdits au moins deux blocs de contact électrique d'étincelage 17, 19, ledit transformateur 43 étant configuré pour abaisser la tension du courant alternatif monophasé ayant été converti par l'onduleur monophasé 41. Ainsi, la tension électrique appliquée aux blocs de contact électrique d'étincelage 17, 19 est adaptée.

En outre, le système de conversion d'énergie électrique 40 peut comprendre un onduleur triphasé 45, ledit onduleur triphasé 45 étant disposé entre le système de génération d'énergie électrique 30 et au moins un organe choisi parmi le système de refroidissement 50, l'outil d'ébavurage 5, et la centrale mécanique 60. Cet onduleur triphasé 45 est configuré pour convertir le courant continu fourni par le système de génération d'énergie électrique 30 en un courant alternatif triphasé, ledit courant alternatif triphasé alimentant directement ou indirectement en énergie électrique ledit au moins un organe. Ainsi, le système de génération d'énergie électrique 30 peut alimenter à la fois les blocs de contact électrique d'étincelage 17, 19, mais également le système de refroidissement 50, l'outil d'ébavurage 5, des dispositifs auxiliaires 7 et/ou la centrale mécanique 60.

Enfin, le système de conversion d'énergie électrique 40 peut comprendre un abaisseur de tension 47 disposé entre le système de génération d'énergie électrique 30 et les dispositifs auxiliaires 7. Cet abaisseur de tension 47 est configuré pour abaisser une tension du courant continu fourni par le système de génération d'énergie électrique 30 en un courant continu ayant une tension plus faible, de sorte à alimenter directement ou indirectement les dispositifs auxiliaires 7. Ainsi, il est possible d'adapter la fourniture en énergie électrique en fonction des demandes en énergie électrique des dispositifs auxiliaires 7.

L'ensemble des dispositions précédemment décrites permettent de proposer un système de soudure mobile ou stationnaire 1 par étincelage bout à bout apte à réaliser le soudage de deux pièces métalliques R1, R2 en utilisant une puissance réduite. En effet, l'utilisation d'un système de génération d'énergie électrique 30 à courant continu permet de fournir un courant suffisant pour alimenter les blocs de contact électrique d'étincelage 17, 19 et réaliser le soudage.

## Revendications

1. Système de soudure mobile ou stationnaire (1) pour réaliser un soudage d'une première pièce métallique (R1) avec une deuxième pièce métallique (R2) par étincelage bout à bout, ledit système de soudure (1) comprenant :
- une tête de soudage (10) comprenant un premier mécanisme de serrage (11) destiné à maintenir la première pièce métallique (R1), un deuxième mécanisme de serrage (13) destiné à maintenir la deuxième pièce métallique (R2), et au moins un vérin (15) configuré pour faire varier, par déplacement du premier mécanisme de serrage (11) et/ou du deuxième mécanisme de serrage (13), une distance séparant le premier mécanisme de serrage (11) du deuxième mécanisme de serrage (13) ;
- au moins deux blocs de contact électrique d'étincelage (17, 19) comprenant un premier bloc de contact (17) destiné à assurer un contact électrique avec la première pièce métallique (R1) et un deuxième bloc de contact (19) destinée à assurer un contact électrique avec la deuxième pièce métallique (R2) ; lesdits au moins deux blocs de contact électrique d'étincelage (17, 19) étant configurées pour permettre le passage d'un courant alternatif ;
- un système de génération d'énergie électrique (30) à courant continu configuré pour fournir un courant continu ;
- un système de conversion d'énergie électrique (40) comprenant au moins un onduleur (41), ledit au moins un onduleur (41) étant disposé entre le système de génération d'énergie électrique (30) et lesdits au moins deux blocs de contact électrique d'étincelage (17, 19) et étant configuré pour convertir le courant continu fourni par le système de génération d'énergie électrique (30) en un courant alternatif, ledit courant alternatif alimentant directement ou indirectement lesdits au moins deux blocs de contact électrique d'étincelage (17, 19).

2. Système de soudure (1) selon la revendication 1, dans lequel le système de génération d'énergie électrique (30) à courant continu comprend une batterie (31).

3. Système de soudure (1) selon la revendication 2, comprenant un dispositif de charge (3) configuré pour charger la batterie (31), de manière à stocker de l'énergie électrique.

4. Système de soudure (1) selon la revendication 3, dans lequel le dispositif de charge (3) comprend un adaptateur de charge destiné à permettre une connexion électrique avec une caténaire (C).

5. Système de soudure (1) selon l'une quelconque des revendications 1 à 4, dans lequel le système de conversion d'énergie électrique (40) comprend un transformateur (43) disposé entre l'onduleur (41) et lesdits au moins deux blocs de contact électrique d'étincelage (17, 19), ledit transformateur (43) étant configuré pour abaisser la tension du courant alternatif monophasé ayant été converti par l'onduleur (41).

6. Système de soudure (1) selon l'une quelconque des revendications 1 à 5, comprenant en outre un système de refroidissement (50) configuré pour refroidir la tête de soudage (10).

7. Système de soudure (1) selon l'une quelconque des revendications 1 à 6, comprenant en outre un outil d'ébavurage (5) définissant intérieurement un profil de soudure (5p), ledit outil d'ébavurage (5) étant destiné à être déplacé le long d'une soudure résultant du soudage de la première pièce métallique (R1) et de la deuxième pièce métallique (R2), de sorte à retirer un excès de métal débordant hors du profil de soudure (5p).

8. Système de soudure (1) selon l'une quelconque des revendications 1 à 7, comprenant en outre une centrale mécanique (60) configuré pour actionner au moins un élément choisi parmi : l'outil d'ébavurage (5), le premier mécanisme de serrage (11), le deuxième mécanisme de serrage (13), et ledit au moins un vérin (15).

9. Système de soudure (1) selon l'une quelconque des revendications 6 à 8, dans lequel le système de conversion d'énergie électrique (40) comprend un onduleur triphasé (45), ledit onduleur triphasé (45) étant disposé entre le système de génération d'énergie électrique (30) et au moins un organe choisi parmi le système de refroidissement (50), le outil d'ébavurage (5), et la centrale mécanique (60), l'onduleur triphasé (45) étant configuré pour convertir le courant continu fourni par le système de génération d'énergie électrique (30) en un courant alternatif triphasé, ledit courant alternatif triphasé alimentant directement ou indirectement en énergie électrique ledit au moins un organe.

10. Système de soudure (1) selon l'une quelconque des revendications 1 à 9, comprenant des dispositifs auxiliaires (7), lesdits dispositifs auxiliaires (7) comprenant au moins un capteur choisi parmi : des capteurs de température, des capteurs de tension électrique, des capteurs de courant électrique, des capteurs de forces, et des capteurs de déplacement, les dispositifs auxiliaires (7) comprenant en outre une unité de commande (9) configurée pour piloter la tête de soudage (10) et lesdits au moins deux blocs de contact électrique d'étincelage (17, 19) en fonction de données mesurées par ledit au moins un capteur.

11. Système de soudure (1) selon la revendication 10, dans lequel le système de conversion d'énergie électrique (40) comprend un abaisseur de tension (47), ledit abaisseur de tension (47) étant disposé entre le système de génération d'énergie électrique (30) et les dispositifs auxiliaires (7), ledit abaisseur de tension (47) étant configuré pour abaisser une tension du courant continu fourni par le système de génération d'énergie électrique (30) en un courant continu ayant une tension plus faible, de sorte à alimenter directement ou indirectement les dispositifs auxiliaires (7).

12. Système de soudure (1) selon l'une quelconque des revendications 1 à 11, comprenant une grue de manutention (2) configurée pour déplacer la tête de soudage (10).

13. Système de soudure (1) selon l'une quelconque des revendications 1 à 12, comprenant un conteneur (4) comprenant des roues et des galets, lesdites roues étant destinée à permettre un déplacement du conteneur (4) sur une route, et les galets étant destinés à permettre un déplacement du conteneur (4) sur des rails ; la tête de soudage (10), les blocs de contact électrique d'étincelage (17, 19), le système de génération d'énergie électrique (30), et le système de conversion électrique étant logés à l'intérieur du conteneur (4).

14. Système de soudure (1) mobile selon l'une quelconque des revendications 1 à 13,
